Europäisches Patentamt

European Patent Office

Office européen des brevets

(19)

(11) Publication number: **0 053 167**
**B1**

(12) # EUROPEAN PATENT SPECIFICATION

(45) Date of publication of patent specification: **19.09.84**

(51) Int. Cl.³: **G 01 N 21/63**

(21) Application number: **81901711.2**

(22) Date of filing: **09.06.81**

(86) International application number:
**PCT/FI81/00044**

(87) International publication number:
**WO 81/03704 24.12.81 Gazette 81/30**

(54) **PROCEDURE AND APPARATUS FOR EXAMINING THE SURFACE QUALITY OF SOLID MATERIALS.**

(30) Priority: **10.06.80 FI 801850**

(43) Date of publication of application:
**09.06.82 Bulletin 82/23**

(45) Publication of the grant of the patent:
**19.09.84 Bulletin 84/38**

(84) Designated Contracting States:
**CH DE FR GB LI NL SE**

(56) References cited:
**DE-A-2 502 289**
**FR-A-2 247 699**
**GB-A-1 315 654**
**GB-A-2 038 481**
**US-A-4 227 809**

(73) Proprietor: **Valmet Oy**
**Punanotkonkatu 2**
**SF-00130 Helsinki 13 (FI)**
(73) Proprietor: **LUUKKALA, Mauri**
**Kuusikallionkuja 3 F**
**SF-02210 Espoo 21 (FI)**

(72) Inventor: **LUUKKALA, Mauri**
**Kuusikallionkuja 3 F**
**SF-02210 Espoo 21 (FI)**
Inventor: **LEINO, Jorma**
**Emännäntie 31C**
**SF-40740 Jyväskylä 74 (FI)**

(74) Representative: **Whalley, Kevin et al**
**Marks & Clerk 57/60 Lincoln's Inn Fields**
**London WC2A 3LS (GB)**

Courier Press, Leamington Spa, England.

EP 0 053 167 B1

## Description

The present invention concerns a procedure for examining solid materials such as metals, paper, etc., to detect surface defects, surface cracks, properties of coatings, or the surface quality of paper, or for measuring the thickness of the hardened surface layer of steel. The invention also concerns apparatus for carrying out the procedure of the invention.

Detection of surface cracks is exceedingly important from the viewpoint of non-destructive materials testing, e.g. in nuclear power plants and in various motor and engine constructions, in shafts, bearings, etc. It is possible to detect surface cracks by a number of methods, of which may be mentioned, for instance, those which are based on infra-red radiation.

Infra-red radiation belongs in that part of the radiant spectrum where the radiation wavelength starts at about 1 $\mu$m, extending up to about 10—20 $\mu$m. Infra-red radiation, or thermal radiation, has a wavelength so large that it is invisible to the human eye. Objects at room temperature emit into their surroundings thermal radiation of about 10 $\mu$m wavelength. The wavelength of visible light ranges from 0.4 $\mu$m up to about 0.8 $\mu$m, and it is thus understood that visible light is of substantially shorter wavelength. Optical microscopes make use of this visible spectrum. The optical microscope may also be called an image-forming apparatus, or camera.

In image-forming apparatus of prior art an arrangement has been employed which uses a lens to form the image, in accordance with the principles of common lens optics, in the image plane. The lens must, however, be of a material which is transparent to the required thermal radiation, e.g. of germanium or silicon. An infra-red detector is disposed in the image plane and displaced according to a lattice pattern across the image plane, one image point at a time. As an infra-red detector one may use, e.g. pyrometric detectors or other so-called infra-red semiconductor detectors. A detector of this type is, in its turn, electrically connected to an electronic amplifier which electronically amplifies, or in another way processes, the infra-red signal that is being received, so that an image resembling a TV screen presentation can be obtained on some kind of display tube. Such systems also exist in which the infra-red detector is stationary in the image plane, but the apparatus comprises, in addition to the lens optics, a complex mirror system which "sweeps" or "scans" the image one line at a time across the detector. All the image-forming systems now mentioned utilize the object's own static temperature as their source of infra-red radiation, and this is a drawback common to the image-forming systems of prior art.

British Patent Specification GB—A— 1 474 191 and the corresponding German Specification DE—A1—2 502 289 describe a method and apparatus for measuring the surface roughness of a material using a laser beam and detecting the light scattered from the surface, relative movement of the surface and the beam being essential. The laser may operate in the visible or infra-red spectrum, the detector operating in the same spectrum. Inspection of the subsurface layer is not possible.

The object of the invention is to provide an improvement of the procedures known at present which serve the examination of surface quality of materials in the solid state. It is a detailed object of the invention to provide a procedure enabling the material's surface to be examined at various depths under the surface of the material.

The aims of the invention are achieved by a procedure in which a light beam having wavelengths only in the visible light spectrum is directed onto the material to be examined, characterised in that the light beam is a pulsed light beam and at least part of the said pulsed light beam is absorbed by the surface layer of the material under examination and causes a rise of the surface temperature of the material under examination, such that the surface of the material under examination which has been heated by the said pulsed light beam emits pulsed infra-red radiation, and the pulsed infra-red radiation emitted by the material under examination is detected by means sensitive to only infra-red radiation.

Additional features of the procedure of the invention are stated in claims 2 to 5.

The invention also provides apparatus for carrying out the procedure of the invention, the apparatus comprising a laser light source emitting light only in the visible spectrum and being characterised in that it comprises means for pulsing the light beam from the laser light source, a lens system focussing the pulsed laser light beam onto the surface of the material under examination, and a detector sensitive only to infra-red radiation for observing the pulsed infra-red radiation emitted by the surface of the material under examination.

Additional features of the apparatus are stated in claims 7 and 8.

It is possible with the procedure and apparatus of the invention to observe, e.g., surface cracks or fissures of metal specimens, the properties of various coatings, to examine printing paper for its surface quality, and to measure, e.g., the thickness of the surface hardening layer of steel. The advantage of the procedure of the invention lies in the fact that there is no need to touch the specimen; instead the surface to be measured is swept over with a laser light beam. The invention is based on the changes in thermal properties of the specimen surface layer and on observation of the temperature rise, occurring e.g. at a crack, with the aid of the infra-red detector. The temperature rise in the surface layer is caused in a controlled manner with a laser light beam, the light beam being absorbed by the specimen surface layer and is converted to heat.

It is thus understood that the present invention is based on a phenemenon which may be termed the photothermic phenomenon. This implies the heating effect caused by light. If the situation is considered wherein a light beam chopped at a given frequency impinges on the surface of the specimen under examination, it is noted that part of this light is dispelled by scattering, while part of the light is absorbed by the surface layer of the specimen and is converted to heat. The conversion to heat takes place within a few nanoseconds. The heat pulse thus produced is diffused, in accordance with the laws of physics, partially in under the specimen surface, but part of the heat remains on the surface of the specimen, whereby the specimen surface temperature increases. The temperature increase of the specimen surface is primarily dependent on the light power and on the light absorption properties and thermal properties of the specimen surface. The thermal properties include, in the first place, thermal conductivity, specific heat and density. Since the incoming light is pulsed at a given frequency, the specimen surface is also heated at the same pulse frequency. It is obvious that if the light beam has been focussed to constitute a small punctiform dot on the specimen surface, the surface too will be heated at exactly the same point. Depending on the thermal properties of the specimen surface, the periodic heating of the surface is different at different points of the surface. If the heating is observed or monitored with the aid of some kind of detector, a "thermal map" of the surface can be obtained.

The temperature elevation of the specimen surface may well be several degrees Centigrade over the room temperature if a laser with sufficient power is used. The use of laser is particularly easy since the light beam of a laser is easy to direct and since it is easy to focus its light beam with even one single lens. A good idea of the temperature elevation is obtained through the information that for instance a one-watt argon laser will burn a hole through paper. If the light of the argon laser is furthermore focussed, the temperature rise may become very high indeed. However, the temperature rise is greatly influenced by the thermal properties of the object. Therefore, paper for instance may catch fire owing to the poor thermal conductivity of paper, while e.g. a steel plate of 5 mm thickness appears to be heated hardly at all. In every case, this conversion of visible light into a heat pulse is the so-called photothermic phenomenon.

The periodic temperature rise of the specimen's surface temperature can be observed, or monitored, in various ways, for instance with pyroelectric infra-red detectors, which comprise an electronic amplification circuit tuned to the same frequency as the modulation frequency of the incoming laser light. Hereby the detector can only see the photothermic signal caused by the light pinpoint, and it will attenuate any other, spurious, temperature variations. The central idea of the present invention is indeed that the ·temperature variations are observed without touching the specimen with an infra-red detector. The periodic temperature variation is produced in the specimen in a controlled manner at the desired point by means of a laser operating on a visible light wavelength.

The use of the photothermic infra-red microscope e.g. in the search for cracks is specifically based on the fact that the sharp edge of the crack is more strongly heated that its surroundings because at the crack the heat cannot disperse similarly as in an intact area. If the laser beam is made to scan in lattice fashion over the specimen, one line or point at a time, an image resembling that on a TV screen is obtained on a display tube of the crack.

The total radiation quantity W emitted into the hemisphere by a so-called absolutely black body is, according to Stefan-Boltzmann's law:—

$$W = \rho(T^4 - T_0^4) \qquad (a)$$

In formula (a), T stands for the temperature of the body, $T_0$ for the environment temperature, and $\rho$ is the so-called Stefan-Boltzmann constant.

This radiation law can be applied to approximate the thermal radiation emitted e.g. by a metal surface and by a crack therein. At a thermal discontinuity, such as a crack, the amount of radiation thus increases in proportion to the fourth power of the temperature, thereby causing a good radiation contrast against the background in the image formed by the camera. It has however been found in measurements that were carried out that the temperature rises are fairly small, as a rule only some 2 degrees Centigrade, whereby the per cent change of temperature is on the order of about 1% only, with the consequence that the increase in amount of radiation is nearly linear at a crack.

Other thermal changes, or discontinuities, on the surface of the specimens also affect the infra-red radiation that is generated. Experiments have shown that for instance the surface hardening layer of steel is a poorer heat conductor than the non-hardened surface, and the thickness of the hardened layer can be assessed from the magnitude of the photothermic infra-red signal.

In practical applications, the signal delivered by the infra-red detector is carried to a so-called phase lock amplifier, which forms the product of the signal received and of a reference signal obtained directly from the laser light beam. Of course, the use of phase detection in optical measurements is a technology known in itself in the art.

It is often difficult in practice to make both the laser beam and the infra-red detector scan a given surface, and therefore often the preferred procedure is to place the specimen itself on a micrometer table, which is moved by the aid of a suitable photomechanical control means in the focal plane of the focussed laser light, one point at a time, while at the same time the image dot on the screen display moves in synchronism with said mechanical displacement. A micrometer table of this kind is often called an x/y table. In this way a two-dimensional image is obtained in the display of the thermal properties of the specimen surface. Depending on the amount of displacement in relation to the image dot displacement in the display, a magnification such as is desired can be obtained. If the specimen moves through 1 mm for instance, while the image dot moves 10 mm, the magnification will then be ×10.

It is also possible by regulating the frequency of the light chopper or intensity modulator, to regulate the depth of penetration of the heat pulse and thereby for instance to assess the depth of layer thicknesses or the size of subsurface defects. It should be noted that the heat pulse is propagated in accordance with the diffusion laws, which is known in itself from physics. When analyzing a metallic surface, the frequency of about 10 Hz has proved quite well usable.

In the procedure and means of the invention, visible light is transformed into invisible infrared radiation through a photothermic phenomenon, and therefore for instance a carbon dioxide laser cannot be employed, which radiates light at 10.7 $\mu$m, that is, infra-red radiation; in such case the incident laser light is scattered and directly reflected into the infra-red detector, rendering impossible e.g. the detection of cracks. Likewise, heating of the specimen surface e.g. by means of electrical resistances fails to produce the desired result because then the temperature rise is static, and it is not possible to use in the electronic amplifier any amplifier tuned to a given frequency. It is also a fact that in static heating no observable temperature differences are created at cracks for instance, because the temperature differences level out rapidly.

The invention shall be described in detail with reference to a favourable embodiment of the invention, presented in the figures of the attached drawing, but to which the invention is not meant to be exclusively confined.

Fig. 1 presents, in schematic elevational view, the principle of the measuring procedure of the invention.

Fig. 2 shows, in schematic elevational view, the construction of a photothermic infra-red camera and microscope according to the invention.

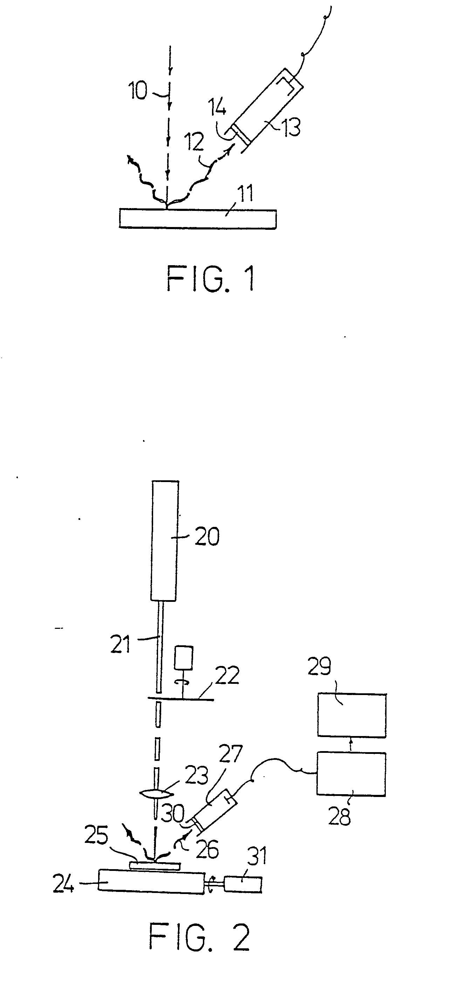

As shown in Fig. 1, the incident modulated laser light 10 heats periodically the desired point on the surface of the specimen 11, and the infra-red radiation 12 emitted by the heated spot of the specimen is observed by the aid of a suitably mounted infra-red detector 13. In front of the infra-red detector 13 has been placed a germanium window 14, which transmits heat radiation only and reflects away any visible light.

In Fig. 2, the light beam 21 from a light source 20, most usually a laser, passes through a light chopper 22 operating at an adjustable frequency, or through an intensity modulator, to the focussing lens 23, in the focal plane of which the specimen 25 has been placed, to be movable by action of an electrically controlled x/y table 24. The modulated infra-red radiation 26 emitted by the surface of the specimen 25 which has been heated by the light beam 21 is collected with the infra-red detector 27, which has been connected over an amplifying and detection apparatus 28 to a CRT display 29. In the CRT display 29, the image dot moves in synchronism with the displacement of the electrically controlled x/y table 29 in a lattice pattern, one line at a time. Naturally, the CRT display 29 may as well be replaced with e.g. a recorder or another output instrument. In front of the infra-red detector 27 there is often a germanium window 39 to make sure that nothing but the thermal infra-red light 26 can enter the detector 27 — not any visible light. If visible light could enter the detector 27, there would be the risk that the detector 27 is heated so that erroneous signals would be obtained.

As mentioned already, the light absorbing capacity of the surface of the specimen 25 may also with varying colour of the surface. Often, however, conditions are such that e.g. the surface of metals is rather homogeneously coloured. If variations of colour occur, as is the case in geological specimens for instance, they can be separately taken into account.

There are several types of light intensity modulator. The simplest is a cogwheel, between the teeth of which the light beam 21 passes through, whereby the light beam 21 will be interrupted by each tooth. If the cogwheel is fitted with an electric motor with adjustable speed, this makes available a "light intensity modulator operating at an adjustable frequency".

So-called x/y tables 24 performing lattice-type motions are available in a number of different types. The x/y tables 24 consists of micrometer tables where the micrometer knob is rotated by a small step motor, the step magnitude being electrically controllable. Such an x/y table 24 with electric motor 31 has also been depicted in Fig. 2.

The step size may be e.g. 1 $\mu$m and the total displacement, e.g. about 20 mm.

**Claims**

1. A procedure for examining solid materials such as metals, paper, etc., to detect surface defects, surface cracks, properties of coatings, or the surface quality of paper, or for measuring the thickness of the hardened surface layer of steel, in which a light beam (21) having wavelengths only in the visible light spectrum is directed onto the material (25) to be examined, characterised in that the light beam is a pulsed light beam and at least part of the said pulsed light beam is absorbed by the surface layer of the material (25) under examination and causes a rise of the surface temperature of the material (25) under examination, such that the surface of the material (25) under examination which has been heated by the said pulsed light beam emits pulsed infra-red radiation (26), and the pulsed infra-red radiation (26) emitted by the material (25) under examination is detected by means (27) sensitive to only infra-red radiation.

2. A procedure according to claim 1, characterised in that the pulsed light beam (21) is focussed to form a dot of light on the surface of the material (25) under examination and the material (25) under examination is moved in the x/y plane, such that the surface of the said material is scanned point by point so as to obtain an image made up of points of the thermal properties of the surface of the material (25) under examination.

3. A procedure according to claim 1, characterised in that the pulsed light beam (21) is focussed to form a dot of light on the surface of the material under examination and the said pulsed light beam (21) is moved such that the surface of the said material is scanned point by point so as to obtain an image made up of points of the thermal properties of the surface of the material (25) under examination.

4. A procedure according to any of claims 1 to 3, characterised in that the pulsed light beam (21) is produced by a pulsed laser.

5. A procedure according to any of claims 1 to 4, characterised in that the intensity modulation frequency of the pulsed light beam (21) is changed as desired with a view to regulating the depth of penetration of the thermal pulse generated in the surface layer of the material (25) under examination.

6. Apparatus for carrying out a procedure according to any of claims 1 to 5 by means of which solid materials such as metals, paper, etc. are examined to detect their surface defects, surface cracks, the properties of coatings, or the surface quality of paper, or to determine the thickness of the hardened surface layer of steel, the apparatus comprising a laser light source (20) emitting light only in the visible spectrum and being characterised in that it comprises means (22) for pulsing the light beam (21) from the laser light source (20), a lens system (23) focussing the pulsed laser light beam (21) onto the surface of the material (25) und examination, and a detector (27) sensitive only to infra-red radiation for observing the pulsed infra-red radiation (26) emitted by the surface of the material (25) under examination.

7. Apparatus according to claim 6, characterised in that the infra-red detector (27) is connected *via* a phase-lock amplifying and detector means (28) to a CRT display (29).

8. Apparatus according to claim 6, characterised in that the apparatus comprises a table means (24) for the material (25) under examination, the table means (24) being arranged to be movable in the x/y plane in a lattice pattern, one point at a time.

**Patentansprüche**

1. Verfahren zum Untersuchen von festen Materialien wie Metallen, Papier usw. zum Ermitteln von Oberflächenfehlern, Oberflächenrissen, Eigenschaften von Beschichtungen oder der Oberflächengüte von Papier oder zum Messen der Dicke der gehärteten Oberflächenschicht von Stahl, wobei ein Lichtstrahl (21) mit Wellenlängen allein im sichtbaren Lichtspektrum auf das zu untersuchende Material (25) gerichtet wird, dadurch gekennzeichnet, daß der Lichtstrahl ein pulsierender Lichtstrahl ist und zumindest ein Teil des pulsierenden Lichtstrahls durch die Oberflächenschicht des Untersuchungsmaterials (25) absorbiert wird und einen Anstieg der Oberflächentemperatur des Untersuchungsmaterials (25) hervorruft, so daß die Oberfläche des Untersuchungsmaterials (25), die durch den pulsierenden Lichtstrahl erwärmt worden ist, pulsierende Infrarotstrahlung (26) aussendet und die von dem Untersuchungsmaterial (25) ausgesendete pulsierende Infrarotstrahlung (26) mittels einer Vorrichtung (27) erfaßt wird, die nur für Infrarotstrahlung empfindlich ist.

2. Verfahren nach Anspruch 1, dadurch gekennzeichnet, daß der pulsierende Lichtstrahl (21) zum Bilden eines Lichtpunktes auf der Oberfläche des Untersuchungsmaterials (25) fokussiert wird und das Untersuchungsmaterial (25) in der x/y-Ebene so bewegt wird, daß die Oberfläche des Materials Punkt für Punkt abgetastet wird, um ein Bild zu erhalten, das aus Punkten der thermischen Eigenschaften der Oberfläche des Untersuchungsmaterials (25) bebildet ist.

3. Verfahren nach Anspruch 1, dadurch gekennzeichnet, daß der pulsierende Lichtstrahl (21) zum Bilden eines Lichtpunktes auf der Oberfläche des Untersuchungsmaterials fokussiert wird und der pulsierende Lichtstrahl (21) so bewegt wird, daß die Oberfläche des Materials Punkt für Punkt abgetastet wird, um ein Bild zu erhalten, das aus Punkten der thermischen Eigenschaften der Oberfläche des Untersuchungsmaterials (25) gebildet ist.

4. Verfahren nach einem der Ansprüche 1 bis 3, dadurch gekennzeichnet, daß der pulsierende Lichtstrahl (21) von einem Impulslaser erzeugt wird.

5. Verfahren nach einem der Ansprüche 1 bis 4, dadurch gekennzeichnet, daß die Intensitätsmodulationsfrequenz des pulsierenden Lichtstrahls (21) nach Wunsch im Hinblick auf das Einstellen der Tiefe des Eindringens des in der Oberflächenschicht des Untersuchungsmaterials (25) erzeugten thermischen Impulses verändert wird.

6. Vorrichtung zum Ausführen eines Verfahrens gemäß einem der Ansprüche 1 bis 5, mit dem feste Materialien wie Metalle, Papier usw. untersucht werden, um deren Oberflächenfehler, Oberflächenrisse, die Eigenschaften von Beschichtungen oder die Oberflächengüte von Papier zu ermitteln oder die Dicke der gehärteten Oberflächenschicht von Stahl zu bestimmen, wobei die Vorrichtung eine Laserlichtquelle (20) aufweist, die nur im sichtbaren Spektrum Licht abgibt, gekennzeichnet durch eine Vorrichtung (22) zur Impulstastung des Lichtstrahls (21) aus der Laserlichtquelle (20), ein Linsensystem (23), das den pulsierenden Laserlichtstrahl (21) auf der Oberfläche des Untersuchungsmaterials (20) fokussiert, und einen nur für Infrarotstrahlung empfindlichen Detektor (27) zum Beobachten der von der Oberfläche des Untersuchungsmaterials (25) ausgesendeten pulsierenden Infrarotstrahlung (26).

7. Vorrichtung nach Anspruch 6, dadurch gekennzeichnet, daß der Infrarot-Detektor (27) über eine phasenstarr gekoppelte Verstärker- und Gleichrichtervorrichtung (28) an ein Kathodenstrahlröhren-Sichtgerät (29) angeschlossen ist.

8. Vorrichtung nach Anspruch 6, gekennzeichnet durch eine Auflagetischvorrichtung (24) für das Untersuchungsmaterial (25), die so gestaltet ist, daß sie jeweils Punkt für Punkt in der x/y-Ebene in einem Rastermuster bewegbar ist.

**Revendications**

1. Procédé pour examiner des matériaux solides tels que des métaux, du papier, etc., pour détecter des défauts de surface, des craquelures de surfaces, des propriétés de revêtements, ou la qualité de surface de papiers, ou pour mesurer l'épaisseur de la couche de surface durcie d'aciers, dans lequel un faisceau lumineux (21) dont les longueurs d'ondes ne sont que dans le spectre de la lumière visible est dirigé sur le matériau (25) soumis à l'examen, caractérisé en ce que le faisceau lumineux est un faisceau lumineux pulsé et en ce qu'au moins une partie dudit faisceau lumineux pulsé est absorbée par le couche de surface du matériau (25) soumis à l'examen et provoque une montée de la température de la surface du matériau (25) soumis à l'examen telle que la surface du matériau (25) soumis à l'examen et qui a été chauffée par ledit faisceau lumineux pulsé émette des radiations infrarouges pulsées (26), les radiations infrarouges pulsées (26) émises par le matériau (25) soumis à l'examen étant détectées par des moyens (27) uniquement sensibles aux radiations infrarouges.

2. Procédé selon la revendication 1, caractérisé en ce que le faisceau lumineux pulsé (21) est concentré pour former un point lumineux sur la surface du matériau (25) soumis à l'examen et le matériau (25) soumis à l'examen est déplacé dans le plan x/y de manière que la surface dudit matériau soit explorée point par point et que l'on obtienne une image, constituée par des points, des propriétés thermiques de la surface du matériau (25) soumis à l'examen.

3. Procédé selon la revendication 1, caractérisé en ce que le faisceau lumineux pulsé (21) est déplacé de manière que la surface dudit matériau soit balayée point par point de façon à obtenir une image, constituée par des points, des propriétés thermiques de la surface du matériau (25) soumis à l'examen.

4. Procédé selon l'une quelconque des revendications 1 à 3, caractérisé en ce que le faisceau lumineux pulsé (21) est produit par un laser pulsé.

5. Procédé selon l'une quelconque des revendications 1 à 4, caractérisé en ce que l'on modifie la fréquence de la modulation d'intensité du faisceau lumineux pulsé (21) comme on le désire en vue de réguler la profondeur de pénétration de l'impulsion thermique engendrée dans la couche de surface du matériau (25) soumis à l'examen.

6. Appareil pour mettre en oeuvre un procédé selon l'une quelconque des revendications 1 à 5, au moyen duquel des matériaux solides tels que des métaux, du papier, etc., sont examinés pour détecter leurs défauts de surface, des craquelures de surface, des propriétés de revêtements, la qualité de surface de papiers, ou pour déterminer l'épaisseur de la couche de surface durcie d'aciers, l'appareil comprenant une source de lumière laser (20) émettant de la lumière uniquement dans le spectre visible et étant caractérisé en ce qu'il comprend des moyens (22) pour faire pulser le faisceau lumineux (21) provenant de la source de lumière laser (20), un système de lentilles (23) concentrant le faisceau lumineux pulsé (21) sur la surface du matériau (25) soumis à l'examen, et un détecteur (27) qui n'est sensible qu'aux radiations infrarouges pour observer les radiations infrarouges pulsées (26) émises par la surface du matériau (25) soumis à l'examen.

7. Appareil selon la revendication 6, caractérisé en ce que le détecteur d'infrarouges est relié par l'intermédiaire d'un moyen amplificateur d'accrochage de phase et détecteur (28) à un affichage TRC (29).

8. Appareil selon la revendication 6, caractérisé en ce que l'appareil comprend une table (24) destinée au matériau (25) soumis à l'examen, la table (24) étant disposée de façon à être mobile dans le plan x/y selon un motif en grille, à raison d'un point à la fois.

FIG. 1

FIG. 2